# FASCICULE DE BREVET EUROPEEN

(11) **EP 3 018 609 B1**
(45) Date de publication et mention de la délivrance du brevet: **02.01.2019**
(21) Numéro de dépôt: 15192654.0
(22) Date de dépôt: 02.11.2015
(51) Int. Cl.: G06F 21/57, G06F 21/74, G06F 21/62

(54) **PROCÉDÉ DE CHARGEMENT DE FICHIER EN MÉMOIRE VIVE DANS UN APPAREIL ÉLECTRONIQUE ET APPAREIL ÉLECTRONIQUE ASSOCIÉ**
HOCHLADEVERFAHREN EINER DATEI IN EINEN ARBEITSSPEICHER EINES ELEKTRONISCHEN GERÄTS, UND ENTSPRECHENDES ELEKTRONISCHES GERÄT
METHOD FOR LOADING A FILE INTO RAM IN AN ELECTRONIC APPARATUS AND ASSOCIATED ELECTRONIC APPARATUS

(30) Priorité: 05.11.2014 FR 1460679
(43) Date de publication de la demande: 11.05.2016
(73) Titulaire: IDEMIA France, 92700 Colombes (FR)
(72) Inventeur: FRANCOIS, Axel, 92700 Colombes (FR); SARTORI, Michele, 92700 Colombes (FR)
(74) Mandataire: Jacobacci Coralis Harle

(56) Documents cités:
- WO-A1-2013/174503
- LI XIAOLEI ET AL: "DroidVault: A Trusted Data Vault for Android Devices", 2014 19TH INTERNATIONAL CONFERENCE ON ENGINEERING OF COMPLEX COMPUTER SYSTEMS, IEEE, 4 août 2014 (2014-08-04), pages 29-38, XP032662094, DOI: 10.1109/ICECCS.2014.13
- "White Paper Towards a Secure Automotive Platform", , 31 août 2009 (2009-08-31), XP055125020, Extrait de l'Internet: URL:http://www.secunet.com/fileadmin/user_ upload/Download/Printmaterial/englisch/sn_ Whitepaper_Secure_Automotive_Platform_E.pd f [extrait le 2014-06-24]
- Anonymous: "A software level analysis of trustzone os and trustlets in samsung galaxy phone", sensepost.com, 4 juin 2013 (2013-06-04), XP055196497, Extrait de l'Internet: URL:https://www.sensepost.com/blog/2013/a- software-level-analysis-of-trustzone-os-an d-trustlets-in-samsung-galaxy-phone/ [extrait le 2015-06-17]
- ARM LIMITED: "ARM Security Technology - Building a Secure System using TrustZone Technology", INTERNET CITATION, 30 avril 2009 (2009-04-30), pages I-XII,1, XP002660015, Extrait de l'Internet: URL:http://infocenter.arm.com/help/topic/c om.arm.doc.prd29-genc-009492c/PRD29-GENC-0 09492C_trustzone_security_whitepaper.pdf [extrait le 2011-09-27]
- JOHANNES WINTER: "Trusted computing building blocks for embedded linux-based ARM trustzone platforms", PROCEEDINGS OF THE 3RD ACM WORKSHOP ON SCALABLE TRUSTED COMPUTING, STC '08, 31 octobre 2008 (2008-10-31), pages 21-30, XP055117999, New York, New York, USA DOI: 10.1145/1456455.1456460 ISBN: 978-1-60-558295-5

## Description

### DOMAINE TECHNIQUE AUQUEL SE RAPPORTE L'INVENTION

La présente invention concerne le partage de fichiers entre un environnement d'exécution de confiance et un environnement d'exécution polyvalent.

Elle concerne plus particulièrement un procédé de chargement de fichier en mémoire vive dans un appareil électronique conçu pour fonctionner dans un environnement d'exécution de confiance et dans un environnement d'exécution polyvalent, ainsi qu'un tel appareil électronique.

L'invention s'applique particulièrement avantageusement dans le cas où on prévoit une zone de mémoire partagée utilisable à la fois par l'environnement d'exécution de confiance et par l'environnement d'exécution polyvalent.

### ARRIERE-PLAN TECHNOLOGIQUE

Comme expliqué par exemple dans l'article "The Untapped Potential of Trusted Execution Environments on Mobile Devices" de J.-E. Ekberg, K. Kostiainen et N. Asokan in IEEE Security & Privacy, volume PP édition 99, 16 avril 2014, il est connu de sécuriser le fonctionnement des appareils électroniques par l'utilisation d'un système d'exploitation de confiance (ou "*Trusted OS*" selon la dénomination anglo-saxonne), qui permet de fournir un environnement d'exécution de confiance (ou TEE pour "*Trusted Execution Environment*") dans lequel certaines applications seulement peuvent être installées et exécutées.

Un tel environnement de confiance est en général proposé à côté d'un environnement polyvalent (ou REE pour "*Rich Execution Environment*") dans lequel les contraintes de sécurité sont moindres et un plus grand nombre d'applications peuvent donc être installées. L'environnement polyvalent repose sur l'exécution au sein de l'appareil électronique d'un système d'exploitation polyvalent (ou "*Rich OS*" selon la dénomination anglo-saxonne), distinct du système d'exploitation de confiance.

Afin de garantir une bonne isolation entre les deux environnements d'exécution et ainsi une bonne sécurité de fonctionnement, on prévoit en général des espaces mémoire dédiés pour chaque environnement d'exécution, notamment en mémoire vive.

Il a toutefois été proposé d'utiliser en outre une zone de mémoire partagée accessible par les deux environnements d'exécution, comme mentionné notamment dans la présentation "Next Generation Mobile Rootkits" de T. Roth, BlackHat Europe 2013 (citée en tant que référence [15] dans l'article mentionné ci-dessus). L'article de Li Xiaolei et al.: "DroidVault: A Trusted Data Vault for Android Devices", 19th international conférence on engineering of complex computer systems, 2014, propose le concept de "trusted data vault", un petit outil de confiance qui gère en toute sécurité le stockage et l'utilisation de données sensibles dans un appareil mobile non fiable.

### OBJET DE L'INVENTION

L'invention est définie par les revendications ci-jointes.

Dans ce contexte, la présente invention propose un procédé de chargement de fichier en mémoire vive dans un appareil électronique conçu pour fonctionner dans un environnement d'exécution de confiance, du fait de l'exécution d'un système d'exploitation de confiance par un processeur de l'appareil électronique, ou dans un environnement d'exécution polyvalent, caractérisé en ce qu'il comprend les étapes suivantes :
- réception, par le système d'exploitation de confiance, d'informations identifiant au moins un fichier ;
- vérification, par le système d'exploitation de confiance, de la conformité du fichier identifié à au moins un critère donné ;
- en cas de conformité, chargement (par exemple par le système d'exploitation de confiance) du fichier identifié dans une zone de mémoire vive accessible en lecture seule lors du fonctionnement dans l'environnement d'exécution polyvalent.

Le système d'exploitation de confiance contrôle ainsi le chargement de fichiers dans une zone de la mémoire vive partagée entre l'environnement d'exécution de confiance et l'environnement d'exécution polyvalent ; cette zone partagée est accessible en lecture seule lors du fonctionnement dans l'environnement d'exécution polyvalent et les fichiers qui y sont mémorisés, utilisés notamment lors du fonctionnement dans l'environnement d'exécution de confiance, ne pourront donc pas être altérés par une application exécutée dans l'environnement d'exécution polyvalent.

Ce procédé de chargement peut être mis en oeuvre au démarrage de l'appareil électronique, comme décrit en détail plus loin, ou en cours de fonctionnement, par exemple au moment du lancement (dans l'environnement d'exécution polyvalent) d'une application correspondant au fichier ou utilisant le fichier.

Le fichier identifié est par exemple une application, une bibliothèque ou un ensemble de données.

Selon d'autres caractéristiques optionnelles et donc non limitatives :
- les informations identifiant le fichier sont contenues dans un descriptif de besoins (par exemple une liste de besoins) préparé lors du fonctionnement dans l'environnement d'exécution polyvalent ;
- le descriptif de besoins est construit en fonction de données représentatives des fréquences d'utilisation des applications installées dans l'environnement d'exécution polyvalent ;
- le descriptif de besoins est construit en fonction de statistiques d'utilisation relatives à plusieurs critères ;
- le procédé comprend une étape de construction, par le système d'exploitation de confiance, d'une liste de partage incluant une désignation du fichier chargé et une adresse de mémorisation du fichier chargé (par exemple une adresse virtuelle comme indiqué ci-après) ;
- la liste de partage inclut une information de vérification d'intégrité associée au fichier chargé ;
- la liste de partage inclut un certificat généré par le système d'exploitation de confiance et relatif au fichier chargé ;
- la liste de partage est mémorisée dans ladite zone de mémoire vive accessible en lecture seule lors du fonctionnement dans l'environnement d'exécution polyvalent ;
- ledit chargement est effectué à partir d'une mémoire non-volatile (par exemple une mémoire non-volatile réinscriptible) ;
- ladite zone est accessible en lecture seule lors du fonctionnement dans l'environnement d'exécution polyvalent au moyen d'adresses virtuelles pointant sur des adresses physiques distinctes des adresses virtuelles concernées ;
- les informations identifiant le fichier sont reçues lors d'un basculement de l'environnement d'exécution polyvalent à l'environnement d'exécution de confiance.

Le procédé peut en outre comprendre les étapes suivantes, exécutées dans l'environnement d'exécution polyvalent pour chaque fichier mentionné dans le descriptif de besoins :
- détermination si le fichier mentionné est chargé dans ladite zone de mémoire vive accessible en lecture seule ;
- dans la négative, chargement du fichier concerné dans une autre zone de mémoire vive accessible en écriture lors du fonctionnement dans l'environnement d'exécution polyvalent.

Le procédé proposé peut en outre comprendre les étapes suivantes :
- suite à une installation d'une nouvelle application dans l'environnement d'exécution polyvalent, transmission au système d'exploitation de confiance d'un descriptif de besoins mis à jour ;
- chargement, dans la zone de mémoire vive accessible en lecture seule lors du fonctionnement dans l'environnement d'exécution polyvalent, d'un nouveau fichier désigné dans le descriptif de besoins mis à jour.

L'invention propose également un appareil électronique comprenant au moins un processeur et une mémoire vive, et conçu pour fonctionner dans un environnement d'exécution de confiance, du fait de l'exécution d'un système d'exploitation de confiance par le processeur, ou dans un environnement d'exécution polyvalent, caractérisé en ce que le système d'exploitation de confiance est conçu pour recevoir des informations identifiant au moins un fichier, pour vérifier la conformité du fichier identifié à au moins un critère donné et pour charger, en cas de conformité, le fichier identifié dans une zone de la mémoire vive accessible en lecture seule lors du fonctionnement dans l'environnement d'exécution polyvalent.

Ce dispositif électronique peut comprendre en outre une ou plusieurs des caractéristiques optionnelles formulées ci-dessus en termes de procédé.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente les éléments principaux d'un appareil électronique utilisé dans le cadre de l'invention ;
- la figure 2 représente schématiquement l'utilisation de deux environnements d'exécution au sein de l'appareil électronique de la figure 1 ;
- la figure 3 illustre le partage de la mémoire vive proposé dans le cadre de l'invention ;
- la figure 4a représente des tables fonctionnelles mémorisées au sein de l'appareil électronique de la figure 1 et utilisées dans le cadre de la présente invention ;
- la figure 4b représente une table tridimensionnelle de mémorisation de statistiques d'utilisation utilisable dans une variante de réalisation ;
- la figure 5 représente un exemple de procédé de chargement de fichiers en mémoire vive conforme à l'invention ;
- la figure 6 représente des listes fonctionnelles élaborées au cours du procédé de la figure 5.

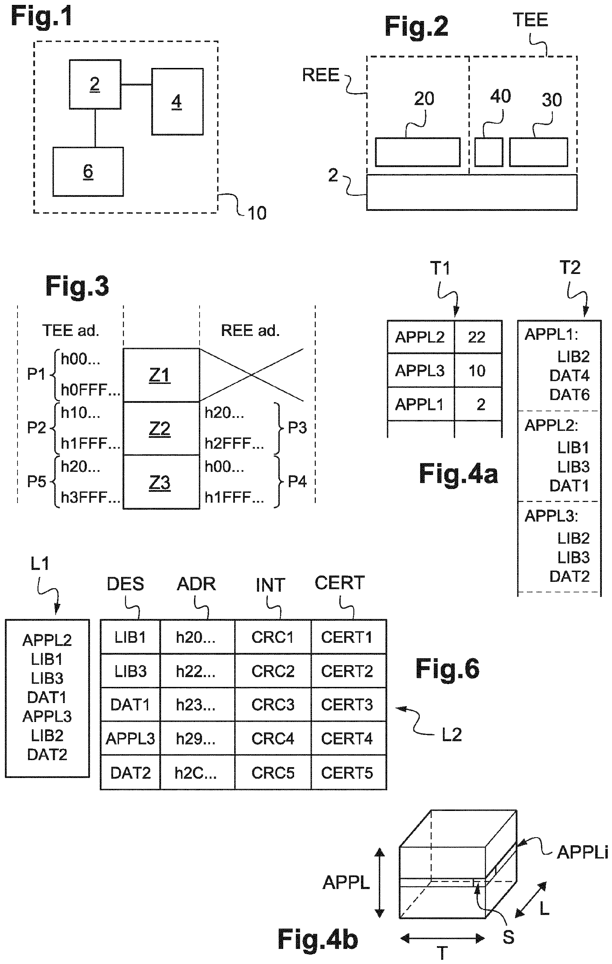

La figure 1 représente les éléments principaux d'un appareil électronique 10 dans lequel est mise en oeuvre l'invention.

Cet appareil électronique 10, ici un terminal (par exemple de type téléphone intelligent ou "*smartphone*" selon la dénomination anglo-saxonne), comprend une architecture à base de microprocesseur. En variante, l'appareil électronique pourrait être un décodeur vidéo (parfois dénommé par l'appellation anglo-saxonne "*set-top box*") ou un appareil électronique connecté (tel qu'un bracelet, une montre, des lunettes ou un compteur de pas).

L'appareil électronique 10 inclut un processeur 2, par exemple un microprocesseur d'un système sur puce (ou SoC pour "*System on Chip*")*.* Outre le processeur 2, un tel système sur puce comprend d'autres éléments électroniques ayant diverses fonctionnalités, par exemple une mémoire morte (non représentée), ou ROM pour "*Read Only Memory*", une mémoire vive 4 - ou RAM pour "*Random Access Memory*" - et une mémoire non-volatile réinscriptible 6, par exemple de type EEPROM pour "*Electrically Erasable and Programmable Read Only Memory*").

La figure 2 représente schématiquement l'utilisation de deux environnements d'exécution au sein de l'appareil électronique 10.

Pour ce faire, deux systèmes d'exploitation distincts peuvent être exécutés par le processeur 2 de l'appareil électronique 10: un système d'exploitation polyvalent 20 (ou "*Rich OS*" selon l'appellation anglo-saxonne) et un système d'exploitation de confiance 30 (ou "*Trusted OS*"), parfois dénommé système d'exploitation sécurisé ("*Secure OS*").

Le système d'exploitation polyvalent 20 permet le téléchargement, l'installation et l'exécution d'applications avec une grande liberté pour l'utilisateur. La mise en oeuvre du système d'exploitation polyvalent 20 crée ainsi un environnement polyvalent ou REE (pour "*Rich Execution Environment*")*.*

Au contraire, dans le cadre du fonctionnement de l'appareil électronique 10 sur la base du système d'exploitation de confiance 30, les possibilités de téléchargement et d'installation d'applications sont limitées (par exemple à des applications ayant reçu une certification particulière) de sorte que l'utilisation du système d'exploitation de confiance permet de créer au sein de l'appareil électronique 10 un environnement d'exécution de confiance ou TEE (pour "*Trusted Execution Environment*")*.*

Cet environnement d'exécution de confiance offre par exemple un niveau de sécurité conforme aux critères communs EAL (pour "*Evaluation Assurance Level*")*,* correspondant à la norme ISO 15408, avec un niveau compris entre 2 et 7, ou à la norme FIPS (pour "*Federal Information Processing Standard*") 140-2.

L'appareil électronique 10 utilise également un moniteur de sécurité 40 (ou "*Secure Monitor*" selon l'appellation anglo-saxonne), qui peut être exécuté par processeur 2 de l'appareil électronique 10. Le moniteur de sécurité 40 commande le basculement entre le fonctionnement de l'appareil électronique 10 sur la base du système d'exploitation polyvalent 20 et le fonctionnement de l'appareil électronique 10 sur la base du système d'exploitation de confiance 30 (et vice versa), de sorte que l'appareil électronique 10 fonctionne à chaque instant sur la base d'un seul des deux systèmes d'exploitation 20, 30 (c'est-à-dire dans un seul des deux environnements mentionnés ci-dessus). Le fonctionnement du moniteur de sécurité 40 répond aux mêmes exigences de sécurité que le système d'exploitation de confiance 30 et on considère donc en général que le moniteur de sécurité 40 fait partie de l'environnement d'exécution de confiance TEE, comme représenté en figure 2.

Selon un mode de réalisation envisageable, le système d'exploitation exécuté avant basculement (par exemple le système d'exploitation polyvalent 20) est mis en veille par le basculement et tout accès à des éléments externes au processeur (par exemple l'interface homme machine comprenant notamment un clavier et/ou un écran et/ou un autre module d'entrée-sortie) est alors inhibé pour le système d'exploitation en veille, de sorte que le système d'exploitation activé par le basculement (ici le système d'exploitation de confiance 30) contrôle totalement l'élément externe, ici l'interface homme machine.

Le moniteur de sécurité 40 peut également permettre, lors du basculement, le passage d'informations du système d'exploitation exécuté avant basculement au système d'exploitation exécuté après basculement, comme illustré dans l'exemple de procédé de chargement de fichiers en mémoire vive présenté plus loin.

Dans l'exemple décrit ici, le système d'exploitation polyvalent 20 et le système d'exploitation de confiance 30 sont exécutés par le processeur 2 de l'appareil électronique 10. On pourrait en variante utiliser un appareil électronique comportant deux processeurs, le système d'exploitation polyvalent 20 étant exécuté sur l'un et le système d'exploitation de confiance 30 étant exécuté sur l'autre.

La figure 3 représente le partage de la mémoire vive 4 en trois zones Z1, Z2, Z3 utilisé dans le cadre de la présente invention.

Une première zone Z1 de la mémoire vive 4 est accessible en lecture et en écriture par le système d'exploitation de confiance 30 seulement. Le système d'exploitation polyvalent 20, et par conséquent les applications exécutées dans l'environnement polyvalent REE, n'ont pas accès à la première zone Z1.

On prévoit par exemple que la première zone Z1 soit accessible par le système d'exploitation de confiance 30 à des adresses comprises dans une première plage P1 d'adresses, ici des adresses dont l'octet de poids fort est compris entre h00 et h0F (la notation hxy signifiant que le nombre xy est exprimé en notation hexadécimale). Ces adresses correspondent par exemple aux adresses physiques dans la mémoire vive 4.

Une seconde zone Z2 de la mémoire vive 4 est une zone partagée utilisée à la fois par le système d'exploitation de confiance 30 et par le système d'exploitation polyvalent 20. Précisément, la seconde zone Z2 est accessible en lecture et en écriture par le système d'exploitation de confiance 30 ; la seconde zone Z2 est en revanche accessible en lecture seule par le système d'exploitation polyvalent 20. Le système d'exploitation polyvalent 20, et ainsi de même les applications exécutées dans l'environnement polyvalent REE, ne peuvent donc pas écrire dans la seconde zone Z2.

On prévoit par exemple que la seconde zone Z2 soit accessible par le système d'exploitation de confiance 30 à des adresses comprises dans une seconde plage P2 d'adresses, ici des adresses dont l'octet de poids fort est compris entre h10 et h1F. Ces adresses correspondent par exemple aux adresses physiques dans la mémoire vive 4. La seconde zone Z2 est en revanche accessible (en lecture seulement) à partir du système d'exploitation polyvalent 20 au moyen d'adresses comprises dans une troisième plage P3 d'adresses, distincte de la seconde plage P2 d'adresses, ici des adresses dont l'octet de poids fort est compris entre h20 et h2F.

Une troisième zone Z3 de la mémoire vive 4 est prévue pour utilisation par le système d'exploitation polyvalent 20 (et les applications exécutées dans l'environnement polyvalent REE). Cette troisième zone Z3 est donc accessible en lecture et en écriture par le système d'exploitation polyvalent 20 et, à travers celui-ci, par les applications exécutées dans l'environnement polyvalent REE.

Bien que l'utilisation de la troisième zone Z3 par le système d'exploitation de confiance 30 ne soit pas prévue en fonctionnement normal, on peut prévoir que le système d'exploitation de confiance 30 ait la possibilité d'accéder à la troisième zone Z3 en lecture et/ou en écriture. Les restrictions imposées aux applications exécutées dans l'environnement de confiance TEE (par exemple en termes de certification) permettent en effet de garantir que les accès à la troisième zone Z3 à partir de l'environnement de confiance TEE seront limités à des cas exceptionnels, par exemple lorsque l'ensemble de la mémoire vive 4 doit être réinitialisée pour un motif de sécurité. Ainsi, le système d'exploitation de confiance 30 peut par exemple lire des données liées à l'utilisateur (nom, information d'interface, etc.) dans la troisième zone Z3. L'écriture de données dans la troisième zone Z3 sera quant à elle limitée à des cas spécifiques (par exemple à des commandes particulières et/ou à des états de fonctionnement particuliers du système d'exploitation de confiance 30).

On prévoit par exemple que la troisième zone Z3 soit accessible par le système d'exploitation polyvalent 20 à des adresses comprises dans une quatrième plage P4 d'adresses distincte de la troisième plage P4 d'adresses ; la quatrième plage P4 d'adresses correspond ici aux adresses dont l'octet de poids fort est compris entre h00 et h1F. Dans les cas où la troisième zone Z3 est accessible à partir du système d'exploitation de confiance 30, les accès peuvent être réalisés au moyen d'adresses comprises dans une cinquième plage P5 d'adresses, distincte des première et seconde plages P1, P2 d'adresses, ici des adresses dont l'octet de poids fort est compris entre h20 et h3F. Ces dernières adresses correspondent par exemple aux adresses physiques dans la mémoire vive 4.

On remarque que les seconde et troisième zones Z2, Z3 sont accessibles par le système d'exploitation polyvalent 20 (et donc pour les applications exécutées dans l'environnement polyvalent REE) à des adresses (virtuelles) distinctes des adresses physiques dans la mémoire vive 4, par exemple grâce à l'utilisation d'alias, ce qui permet de partitionner la mémoire vive 4 entre les différentes zones Z1, Z2, Z3 et d'empêcher tout accès dans la première zone Z1 par des applications exécutées dans l'environnement polyvalent REE, tout en permettant à de telles applications d'accéder en lecture seulement à la seconde zone Z2.

La figure 4a représente des tables fonctionnelles mémorisées au sein de l'appareil électronique 10, par exemple dans la mémoire non-volatile réinscriptible 6.

Une première table T1 mémorise, pour chaque application APPL1, APPL2, APPL3 installée dans l'environnement d'exécution polyvalent REE, une donnée représentative de la fréquence d'utilisation de l'application concernée. Cette donnée représentative de la fréquence d'utilisation est par exemple le nombre d'utilisations de l'application sur une période donnée, ici une période d'une semaine. En variante, on pourrait compter le nombre d'utilisations sur un laps de temps de durée variable, défini par exemple au moyen d'un critère distinct du critère temporel, tel qu'un critère lié à un cycle de charge ou de décharge d'une batterie équipant l'appareil électronique.

Les différentes applications APPL1, APPL2, APPL3 installées peuvent ainsi être classées par fréquence d'utilisation décroissante, par exemple au sein de la première table T1 comme représenté en figure 4a.

En variante, on pourrait utiliser des tables multidimensionnelles (par exemple tridimensionnelles comme représenté en figure 4b) afin de mémoriser des statistiques d'utilisation selon plusieurs critères. On mémorise ainsi par exemple pour chaque application APPLi, comme représenté en figure 4b, une statistique d'utilisation S (par exemple une fréquence d'utilisation) en fonction du moment T (heure et jour de la semaine par exemple) et du lieu L.

Dans ce cas, les différentes applications APPLi peuvent être classées par fréquence d'utilisation décroissante en utilisant les statistiques relatives au moment T dans la semaine correspondant au moment courant et au lieu L correspondant au lieu courant.

Une seconde table T2 mémorise, pour chaque application APPL1, APPL2, APPL3 installée dans l'environnement d'exécution polyvalent REE, les différentes ressources (ou fichiers) utilisées par l'application concernée au cours de son exécution ; ces ressources sont par exemple des bibliothèques de fonctions LIB1, LIB2, LIB3 ou des ensembles (ou fichiers) de données DAT1, DAT2, DAT4, DAT6.

Les applications installées sur l'appareil électronique 10 (pour utilisation dans l'environnement d'exécution polyvalent REE en ce qui concerne les applications APPL1, APPL2, APPL3 mentionnées ci-dessus), ainsi que les ressources qu'elles utilisent (ici les fonctions LIB1, LIB2, LIB3 et les données DAT1, DAT2, DAT4, DAT6), sont mémorisées en mémoire non-volatile réinscriptible 6 (par exemple suite à leur téléchargement d'un ordinateur distant, tel qu'un serveur distributeur de services, grâce à des moyens de télécommunication non représentés de l'appareil électronique 10).

Les applications qui doivent être exécutées par le processeur 2 (ainsi qu'éventuellement au moins une partie des ressources que l'application peut utiliser) sont toutefois chargées en mémoire vive 4, après sélection de l'application par l'utilisateur, ou au préalable comme expliqué ci-dessous afin de rendre plus rapide le lancement de l'application.

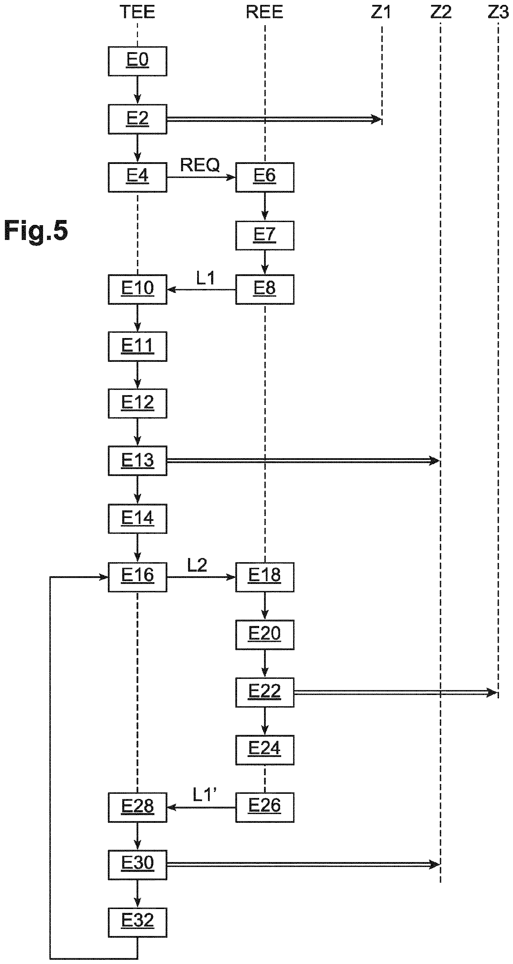

La figure 5 représente un exemple de procédé de chargement de fichiers en mémoire vive 4 lors du démarrage de l'appareil électronique 10.

Ce procédé débute par une étape E0 d'initialisation de l'appareil électronique 10 suite à son démarrage (par exemple du fait de sa mise sous tension par l'utilisateur). Après cette étape d'initialisation E0, tous les octets de la mémoire vive 4 ont en général une valeur prédéterminée (par exemple h00 ou hFF), du fait de la conception physique de la mémoire vive 4 ou d'une sous-étape de réinitialisation forcée comprise dans l'étape d'initialisation E0.

L'étape d'initialisation E0 comprend d'autres sous-étapes nécessaires à l'initialisation du fonctionnement de l'appareil électronique 10, par exemple le chargement, de la mémoire non-volatile réinscriptible 6 à la mémoire vive 4, du système d'exploitation de confiance 30 et le lancement de son exécution.

L'étape d'initialisation E0 est suivie d'une étape E2 au cours de laquelle le système d'exploitation de confiance 30 commande le chargement, dans la première zone Z1 de la mémoire vive 4, de fichiers (applications et ressources utilisées par celle-ci, notamment des bibliothèques et des données) utilisés dans le cadre de l'environnement d'exécution de confiance TEE. Dans le mode de réalisation décrit ici, les fichiers sont chargés (c'est-à-dire copiés) dans la première zone Z1 à partir de la mémoire non-volatile réinscriptible 6 (où ils sont été préalablement installés comme déjà indiqué).

La mémorisation correcte des fichiers dans la première zone Z1 est éventuellement vérifiée par le système d'exploitation de confiance 30, par exemple par attente d'un indicateur de bon fonctionnement en provenance de la mémoire vive 4 (éventuellement accompagné d'une somme de contrôle des données écrites en mémoire) et/ou lecture des données écrites pour comparaison avec les données à écrire.

Les applications chargées dans la première zone Z1 lors de l'étape E2 sont par exemple des applications qui mettent en oeuvre des fonctionnalités de base (telles que celles relatives à la sécurité du fonctionnement de l'appareil électronique 10) ou des applications fréquemment utilisées lors du fonctionnement de l'appareil électronique 10 dans le cadre de l'environnement d'exécution de confiance TEE.

Le procédé se poursuit à l'étape E4 à laquelle le système d'exploitation de confiance 30 émet une requête REQ à destination du système d'exploitation polyvalent 20 afin d'obtenir une liste de besoins et rend la main au système d'exploitation polyvalent 20. Comme déjà indiqué, la transmission d'informations (ici la requête REQ) et le basculement du système d'exploitation de confiance 30 au système d'exploitation polyvalent 20 sont par exemple réalisées au moyen du moniteur de sécurité 40.

Le système d'exploitation polyvalent 20 est donc exécuté par le processeur 2 à l'étape E6 (par exemple après avoir été chargé en mémoire vive 4 par le moniteur de sécurité 40) et reçoit la requête REQ émise par le système d'exploitation de confiance 30 à l'étape E4.

Le système d'exploitation polyvalent 20 prépare alors à l'étape E7 la liste de besoins L1 demandée, qui indique comme expliqué ci-après les fichiers (applications et ressources utilisées par ces applications, notamment des bibliothèques et des données) dont l'utilisation dans le cadre de l'environnement d'exécution polyvalent REE est prévisible.

Pour ce faire, le système d'exploitation polyvalent 20 consulte par exemple la première table T1 afin de déterminer l'application la plus fréquemment utilisée (soit ici l'application APPL2), puis consulte la seconde table T2 afin de déterminer les ressources utilisées par cette application (ici les bibliothèques LIB1, LIB3 et le fichier de données DAT1).

Des références aux fichiers ainsi déterminés (à savoir l'application la plus fréquemment utilisée APPL2 et les ressources LIB1, LIB3, DAT1 utilisées par cette application) sont alors ajoutées dans la liste de besoins L1.

Ce processus peut éventuellement être répété pour d'autres applications, par exemple par ordre décroissant de fréquence d'utilisation, jusqu'à ce que la taille mémoire correspondant aux fichiers listés dans la liste de besoins L1 atteigne un seuil prédéfini (par exemple égal à la taille de la seconde zone Z2 de mémoire vive 4) ou, en variante, pour toutes les applications installées pour utilisation dans l'environnement d'exécution polyvalent REE.

Dans le cas de la figure 6, une référence à l'application APPL3 et aux ressources LIB2, DAT2 est ainsi ajoutée dans la liste de besoins L1. (On remarque que l'on n'ajoute pas à nouveau dans la liste de besoins L1 une référence à un fichier déjà mentionné dans la liste de besoins L1, ici la bibliothèque LIB3.)

Dans le cas où aucune statistique d'utilisation n'est disponible (comme par exemple lors de la première mise en service de l'appareil électronique 10), le système d'exploitation polyvalent 20 utilise par exemple en tant que liste de besoins L1 une liste par défaut (mémorisée dans ce but en mémoire non-volatile réinscriptible 6).

Le système d'exploitation polyvalent 20 émet la liste de besoins L1 à destination du système d'exploitation de confiance 30 à l'étape E8. Comme déjà indiqué précédemment, ce transfert d'information est ici géré par le moniteur de sécurité 40 et s'accompagne du basculement du fonctionnement de l'appareil électronique de l'environnement d'exécution polyvalent REE à l'environnement d'exécution de confiance TEE.

L'exécution du système d'exploitation de confiance 30 reprend donc à l'étape E10, avec réception de la liste de besoins L1.

Le système d'exploitation de confiance 30 détermine alors à l'étape E11, pour chaque fichier référencé dans la liste de besoins L1, si ce fichier est compatible avec un chargement dans la zone de mémoire partagée (ou seconde zone) Z2, en vérifiant la conformité du fichier à certains critères, ici l'un au moins des critères suivants :
- le fichier est susceptible d'être utilisé dans l'environnement d'exécution de confiance TEE (ce qui est le cas lorsque le fichier est certifié et/ou a été installé - c'est-à-dire chargé en mémoire non-volatile réinscriptible 6 - par le système d'exploitation de confiance 30) ;
- l'utilisation de ce (même) fichier d'une part lors du fonctionnement dans l'environnement de confiance TEE et d'autre part lors du fonctionnement dans l'environnement d'exécution polyvalent REE est autorisée (certains fichiers pouvant être spécifiés comme réservés à une utilisation dans l'environnement d'exécution de confiance TEE et donc interdits d'utilisation dans l'environnement d'exécution polyvalent REE, par exemple des fichiers requérant un haut niveau de sécurité).

En pratique, le système d'exploitation de confiance 30 détermine par exemple si un fichier est compatible avec un chargement dans la zone de mémoire partagée Z2 au moyen d'un drapeau (ou indication binaire) contenu à un endroit dédié du fichier concerné, tel que les drapeaux prévus dans les systèmes de droit utilisés par certains systèmes d'exploitation.

Dans l'exemple décrit ici en référence à la figure 6, l'application APPL2 est une application installée lors du fonctionnement de l'appareil électronique 10 dans l'environnement d'exécution polyvalent REE, sans certification, et la bibliothèque LIB2 est une bibliothèque de fonctions cryptographiques (par exemple de chiffrement, de déchiffrement et/ou de signature électronique) dont on ne souhaite pas qu'elle puisse être utilisée tantôt dans le cadre de l'environnement d'exécution de confiance TEE et tantôt dans le cadre de l'environnement d'exécution polyvalent REE. De manière générale, une telle bibliothèque nécessitant un niveau de sécurité élevé est certifiée et sa mise en oeuvre implique un contrôle de son intégrité.

Le système d'exploitation de confiance 30 détermine donc dans cet exemple à l'étape E11 que les fichiers suivants peuvent être chargés dans la seconde zone Z2 de mémoire vive 4 : LIB1, LIB3, DAT1, APPL3, DAT2.

Le système d'exploitation de confiance 30 calcule à l'étape E12 une somme de contrôle globale relative à ces fichiers à charger dans la seconde zone Z2.

Le système d'exploitation de confiance 30 peut alors procéder à l'étape E13 au chargement, dans la seconde zone Z2, des fichiers déterminés à l'étape E11 (ici les fichiers LIB1, LIB3, DAT1, APPL3, DAT2). Ces fichiers sont ici chargés à partir de la mémoire non-volatile réinscriptible 6 (c'est-à-dire copiés de la mémoire non-volatile réinscriptible 6 à la seconde zone Z2 de la mémoire vive 4 sous le contrôle du système d'exploitation de confiance 30).

La mémorisation correcte des fichiers dans la seconde zone Z2 est éventuellement vérifiée par le système d'exploitation de confiance 30, par exemple par attente d'un indicateur de bon fonctionnement en provenance de la mémoire vive 4 (éventuellement accompagné d'une vérification de la somme de contrôle des données écrites en mémoire, calculée comme indiqué ci-dessus à l'étape E12) et/ou lecture des données écrites pour comparaison avec les données à écrire. En variante, au lieu d'utiliser une somme de contrôle globale relative à l'ensemble des fichiers à charger comme proposé ci-dessus, on peut utiliser une somme de contrôle par fichier à charger.

On peut prévoir par ailleurs que le système d'exploitation de confiance 30 libère, dans la première zone Z1, des espaces mémoire où ont été chargés à l'étape E2 des fichiers dont une copie a été chargée dans la seconde zone Z2 à l'étape E13. Lors du fonctionnement dans l'environnement d'exécution de confiance TEE, ces fichiers pourront en effet être consultés ou exécutés par lecture dans la seconde zone Z2 et il est donc inutile d'en conserver une copie dans la première zone Z1.

Le système d'exploitation de confiance 30 procède alors à l'étape E14 à l'élaboration d'une liste de partage L2 qui comprend par exemple pour chaque fichier chargé dans la seconde zone Z2, comme représenté en figure 6 :
- une désignation DES du fichier concerné ;
- l'adresse (ici virtuelle) ADR de mémorisation du fichier concerné, telle qu'utilisable par le système d'exploitation polyvalent 20 pour accéder au fichier (soit une adresse comprise dans la troisième plage P3 d'adresses) ;
- des informations INT de vérification de l'intégrité du fichier concerné, par exemple sous forme d'un code de contrôle par redondance cyclique (ou CRC pour "*cyclic redundancy check*") ;
- un certificat CERT généré pour le fichier concerné par le système d'exploitation de confiance 30 (afin de permettre ultérieurement au système d'exploitation polyvalent 20 de vérifier que le système d'exploitation de confiance 30 est bien à l'origine du chargement du fichier concerné dans le seconde zone Z2).

Dans l'exemple décrit ici, les informations de vérification INT sont obtenues comme indiqué ci-dessus par application d'un algorithme de contrôle de redondance cyclique aux plages mémoire où est mémorisée le fichier concerné. On utilise par exemple un des algorithmes suivants : SHA-2, SHA-3 (SHA provenant de l'anglais "*Secure Hash Algorithm*"), ou MD5 (de l'anglais "*Message-Digest*" 5). En variante, on pourrait utiliser une somme de contrôle (en anglais "*checksum*") ou un code d'authentification (ou MAC, de l'anglais "*Message Authentication Code*").

La liste de partage L2 peut éventuellement contenir en outre, pour chaque fichier chargé dans la seconde zone Z2, l'adresse physique de mémorisation du fichier dans la mémoire vive 4.

Le système d'exploitation de confiance 30 transmet à l'étape E16 la liste de partage L2 ainsi élaborée au système d'exploitation polyvalent 20. Comme précédemment, cette transmission est ici réalisée par l'intermédiaire du moniteur de sécurité 40 avec basculement dans l'environnement d'exécution polyvalent REE.

En variante, la liste de partage L2 pourrait être mémorisée par le système d'exploitation de confiance 30 dans un emplacement prédéfini de mémoire accessible par le système d'exploitation polyvalent 20, par exemple dans un emplacement prédéfini de la seconde zone Z2 de mémoire vive 4.

Afin de vérifier que la liste de partage L2 n'est pas corrompue lorsqu'elle est utilisée, on peut mémoriser un code de redondance cyclique (ou CRC) généré par le système d'exploitation de confiance 30 et associé à la liste de partage L2.

Du fait du basculement initié à l'étape E16, le système d'exploitation polyvalent 20 est à nouveau exécuté à l'étape E18 et mémorise la liste de partage L2 reçue (ou a accès à la liste de partage L2 à l'emplacement prédéfini dans la variante qui vient d'être mentionnée), avec vérification éventuelle du code de redondance cyclique associé à la liste de partage L2.

Lors du fonctionnement ultérieur de l'appareil électronique 10, le système d'exploitation polyvalent 20 et les applications exécutées dans le cadre de l'environnement d'exécution polyvalent REE pourront ainsi consulter la table de partage L2 et accéder aux fichiers mémorisés dans la seconde zone Z2 à l'adresse ADR indiquée dans la table de partage L2 pour le fichier concerné, en vérifiant éventuellement l'intégrité du fichier grâce aux informations INT présentes dans la table de partage L2 pour le fichier concerné et/ou l'origine du fichier grâce au certificat CERT présent dans la table de partage L2 pour le fichier concerné.

Sur la base de la liste de partage L2 reçue (ou consultable à l'emplacement prédéfini) et de la liste de besoins L1 préparée à l'étape E7, le système d'exploitation polyvalent 20 détermine (par différence) à l'étape E20 quels fichiers référencés dans la liste de besoins L1 n'ont pas été chargés dans la seconde zone Z2 (les fichiers chargés dans la seconde zone Z2 étant désignés dans la liste de partage L2).

Les fichiers déterminés à l'étape E20 comme présents dans la liste de besoins L1 et absents de la liste de partage L2 sont alors chargés à l'étape E22 dans la troisième zone Z3, c'est-à-dire copiés de la mémoire non-volatile réinscriptible 6 (où ils ont été préalablement installés) à la troisième zone Z3 de la mémoire vive 4 sous le contrôle du système d'exploitation polyvalent 20.

La mémorisation correcte des fichiers dans la troisième zone Z3 est d'ailleurs éventuellement vérifiée par le système d'exploitation polyvalent 20, par exemple par attente d'un indicateur de bon fonctionnement en provenance de la mémoire vive 4 (éventuellement accompagné d'une somme de contrôle des données écrites en mémoire) et/ou lecture des données écrites pour comparaison avec les données à écrire.

Le chargement des fichiers dans les différentes zones Z1, Z2, Z3 de la mémoire vive 4 est ainsi terminé et le fonctionnement normal peut donc débuter à l'étape E24, par exemple par attente d'une commande de l'utilisateur au niveau de l'interface homme machine (non représentée) de l'appareil électronique 10.

Le fonctionnement normal se poursuit jusqu'au moment où une nouvelle application est installée dans le cadre du fonctionnement dans l'environnement d'exécution polyvalent REE.

Le système d'exploitation polyvalent 20 prépare alors une liste de besoins mise à jour L1' et transmet cette liste des besoins au système d'exploitation de confiance 30 à l'étape E26.

Le système d'exploitation de confiance 30 reçoit la liste de besoins mise à jour L1' et détermine (comme lors de l'étape E10) les nouveaux fichiers à charger dans la seconde zone Z2, ainsi qu'éventuellement les fichiers à supprimer de la seconde zone Z2 afin de libérer de l'espace mémoire pour les nouveaux fichiers. On utilise par exemple dans ce cadre une méthode de gestion de pages mémoire de type FIFO (de l'anglais "*First ln, First Out*")*,* ou LRU (de l'anglais "*Least Recently Used*", ou LFU (de l'anglais "*Least Frequently Used*"), ou encore de type priorité aléatoire (ou "*Random Priority*").

Le système d'exploitation de confiance 30 calcule alors un code de redondance cyclique relatif aux nouveaux fichiers à charger dans la seconde zone Z2 et commande l'écriture des nouveaux fichiers dans la seconde zone Z2 (étape E30).

Le système d'exploitation de confiance 30 met alors à jour à l'étape E32 la liste de partage L2 (pour tenir compte des nouveaux fichiers chargés dans la seconde zone Z2). Le procédé continue ensuite à l'étape E16 décrite ci-dessous pour basculement vers l'environnement d'exécution polyvalent REE avec envoi de la liste de partage (mise à jour) et chargement dans la zone Z3 des fichiers nécessaires au fonctionnement de la nouvelle application et qui n'ont pas été chargés dans la zone Z2.

En variante des étapes E26 à E32 qui viennent d'être décrites, le procédé pourrait boucler à l'étape E4 lors de l'installation d'une nouvelle application dans l'environnement d'exécution polyvalent REE afin de mettre en oeuvre en totalité le procédé de chargement de fichiers dans la zone Z2 tel que décrit ci-dessus aux étapes E4 à E16.

## Revendications

1. Procédé de chargement d'application en mémoire vive (4) dans un appareil électronique (10) conçu pour fonctionner dans un environnement d'exécution de confiance (TEE), du fait de l'exécution d'un système d'exploitation de confiance (30) par un processeur (2) de l'appareil électronique (10), ou dans un environnement d'exécution polyvalent (REE), **caractérisé en ce qu'**il comprend les étapes suivantes :
- réception (E10), par le système d'exploitation de confiance (30), d'informations (L1) identifiant au moins une application, les informations identifiant ladite application étant contenues dans un descriptif de besoins (L1) préparé lors du fonctionnement dans l'environnement d'exécution polyvalent (REE) ;
- vérification (E11), par le système d'exploitation de confiance (30), de la conformité de l'application identifiée à au moins un critère donné ;
- en cas de conformité, chargement (E13) de l'application identifiée dans une zone (Z2) de mémoire vive (4) accessible en lecture seule lors du fonctionnement dans l'environnement d'exécution polyvalent (REE).

2. Procédé de chargement selon la revendication 1, dans lequel le descriptif de besoins (L1) est construit (E7) en fonction de données (T1) représentatives des fréquences d'utilisation des applications installées dans l'environnement d'exécution polyvalent (REE).

3. Procédé de chargement selon la revendication 1 ou 2, dans lequel le descriptif de besoins (L1) est construit (E7) en fonction de statistiques d'utilisation relatives à plusieurs critères.

4. Procédé de chargement selon l'une des revendications 1 à 3, comprenant les étapes suivantes, exécutées dans l'environnement d'exécution polyvalent (REE) pour chaque application mentionnée dans le descriptif de besoins (L1) :
- détermination si l'application mentionnée est chargée dans ladite zone (Z2) de mémoire vive (4) accessible en lecture seule ;
- dans la négative, chargement de l'application concernée dans une autre zone (Z3) de mémoire vive (4) accessible en écriture lors du fonctionnement dans l'environnement d'exécution polyvalent (REE).

5. Procédé de chargement selon l'une des revendications 1 à 4, comprenant une étape de construction (E14), par le système d'exploitation de confiance (30), d'une liste de partage (L2) incluant une désignation (DES) de l'application chargée et une adresse (ADR) de mémorisation de l'application chargée.

6. Procédé de chargement selon la revendication 5, dans lequel la liste de partage (L2) inclut une information (INT) de vérification d'intégrité associée à l'application chargée.

7. Procédé de chargement selon la revendication 5 ou 6, dans lequel la liste de partage (L2) inclut un certificat (CERT) généré par le système d'exploitation de confiance (30) et relatif à l'application chargée.

8. Procédé de chargement selon l'une des revendications 5 à 7, dans lequel la liste de partage (L2) est mémorisée dans ladite zone (Z2) de mémoire vive (4) accessible en lecture seule lors du fonctionnement dans l'environnement d'exécution polyvalent (REE).

9. Procédé de chargement selon l'une des revendications 1 à 8, dans lequel ledit chargement est effectué à partir d'une mémoire non-volatile (6).

10. Procédé de chargement selon l'une des revendications 1 à 9, dans lequel ladite zone (Z2) est accessible en lecture seule lors du fonctionnement dans l'environnement d'exécution polyvalent (REE) au moyen d'adresses virtuelles pointant sur des adresses physiques distinctes des adresses virtuelles concernées.

11. Procédé de chargement selon l'une des revendications 1 à 10, dans lequel les informations (L1) identifiant l'application sont reçues lors d'un basculement de l'environnement d'exécution polyvalent (REE) à l'environnement d'exécution de confiance (TEE).

12. Procédé de chargement selon l'une des revendications 1 à 11, comprenant en outre les étapes suivantes :
- suite à une installation d'une nouvelle application dans l'environnement d'exécution polyvalent (REE), transmission (E26) au système d'exploitation de confiance (30) d'un descriptif de besoins mis à jour (L1') ;
- chargement (E30), dans la zone (Z2) de mémoire vive (4) accessible en lecture seule lors du fonctionnement dans l'environnement d'exécution polyvalent (REE), d'un nouveau fichier désigné dans le descriptif de besoins mis à jour (L1').

13. Appareil électronique (10) comprenant au moins un processeur (2) et une mémoire vive (4), et conçu pour fonctionner dans un environnement d'exécution de confiance (TEE), du fait de l'exécution d'un système d'exploitation de confiance (30) par le processeur (2), ou dans un environnement d'exécution polyvalent (REE), **caractérisé en ce que** le système d'exploitation de confiance (30) est conçu pour recevoir des informations (L1) identifiant au moins une application, les informations identifiant ladite application étant contenues dans un descriptif de besoins (L1) préparé lors du fonctionnement dans l'environnement d'exécution polyvalent (REE), pour vérifier la conformité de l'application identifiée à au moins un critère donné et pour charger, en cas de conformité, l'application identifiée dans une zone (Z2) de la mémoire vive (4) accessible en lecture seule lors du fonctionnement dans l'environnement d'exécution polyvalent (REE).

## Patentansprüche

1. Verfahren zum Laden einer Datei in einen Arbeitsspeicher (4) eines elektronischen Geräts (10), das wegen der Ausführung eines Vertrauensbetriebssystems (30) durch einen Prozessor (2) des elektronischen Geräts (10) für einen Betrieb in einem Vertrauensbetriebsbereich (TEE) oder das für einen Betrieb in einem polyvalenten Betriebsbereich (REE) ausgelegt ist, **dadurch gekennzeichnet, daß** es die folgenden Schritte aufweist:
- Empfangen (E10) von Informationen (L1) durch das Vertrauensbetriebssystem (30), die wenigstens eine Datei identifizieren, wobei die die Datei identifizierenden Informationen in einer während des Betriebs im polyvalenten Betriebsbereich (REE) vorbereiteten Bedarfsbeschreibung (L1) enthalten sind,
- Überprüfen (E11) der Konformität der identifizierten Datei durch das Vertrauensbetriebssystem (30) auf wenigstens ein bestimmtes Kriterium hin,
- bei gegebener Konformität Laden (E13) der identifizierten Datei in eine Zone (Z2) des Arbeitsspeichers (4), die bei Betrieb im polyvalenten Betriebsbereich (REE) nur im Lesemodus zugänglich ist.

2. Ladeverfahren gemäß Anspruch 1, bei dem die Bedarfsbeschreibung (L1) in Abhängigkeit von Daten (T1) aufgebaut wird (E7), die die Häufigkeit der Benutzung der im polyvalenten Betriebsbereich (REE) installierten Dateien darstellen.

3. Ladeverfahren gemäß Anspruch 1 oder 2, bei dem die Bedarfsbeschreibung (L1) in Abhängigkeit von Benutzungsstatistiken bezüglich mehrerer Kriterien aufgebaut wird (E7).

4. Ladeverfahren gemäß einem der Ansprüche 1 bis 3, das die folgenden Schritte aufweist, die im polyvalenten Betriebsbereich (REE) für jede in der Bedarfsbeschreibung erwähnte Datei ausgeführt werden:
- Bestimmen, ob die erwähnte Datei in die nur im Lesemodus zugängliche Zone (Z2) des Arbeitsspeichers (4) geladen ist,
- falls nicht, Laden der betreffenden Datei in eine andere Zone (Z3) des Arbeitsspeichers (4), die bei Betrieb im polyvalenten Betriebsbereich (REE) im Schreibmodus zugänglich ist.

5. Ladeverfahren gemäß einem der Ansprüche 1 bis 4, das einen Schritt (E14) des Aufbaus einer Freigabeliste (L2) durch das Vertrauensbetriebssystem (30) aufweist, wobei die Liste eine Bezeichnung (DES) der geladenen Datei und eine Speicheradresse (ADR) der geladenen Datei beinhaltet.

6. Ladeverfahren gemäß Anspruch 5, bei dem die Freigabeliste (L2) eine Information (INT) über die der geladenen Datei zugeordnete Integritätsprüfung beinhaltet.

7. Ladeverfahren gemäß Anspruch 5 oder 6, bei dem die Freigabeliste (L2) ein durch das Vertrauensbetriebssystem (30) erzeugtes und die geladene Datei betreffendes Zertifikat (CERT) beinhaltet.

8. Ladeverfahren gemäß einem der Ansprüche 5 bis 7, bei dem die Freigabeliste (L2) in der bei Betrieb im polyvalenten Betriebsbereich (REE) nur im Lesemodus zugänglichen Zone (Z2) des Arbeitsspeichers (4) gespeichert wird.

9. Ladeverfahren gemäß einem der Ansprüche 1 bis 8, bei dem das Laden von einem nichtflüchtigen Speicher (6) aus erfolgt.

10. Ladeverfahren gemäß einem der Ansprüche 1 bis 9, bei dem die besagte Zone (Z2) bei Betrieb im polyvalenten Betriebsbereich (REE) nur im Lesemodus, und zwar über virtuelle Adressen, die auf verschiedene physische Adressen der betreffenden virtuellen Adressen verweisen, zugänglich ist.

11. Ladeverfahren gemäß einem der Ansprüche 1 bis 10, bei dem die die Datei identifizierenden Informationen (L1) bei einem Übergang vom polyvalenten Betriebsbereich (REE) zum Vertrauensbetriebsbereich (TEE) empfangen werden.

12. Ladeverfahren gemäß einem der Ansprüche 1 bis 11, das außerdem die folgenden Schritte aufweist:
- nach einem Installieren einer neuen Datei im polyvalenten Betriebsbereich (REE) : Übertragung (E26) einer aktualisierten Bedarfsbeschreibung (L1') an das Vertrauensbetriebssystem (30),
- Laden (E30) einer in der aktualisierten Bedarfsbeschreibung (L1') bezeichneten neuen Datei in die bei Betrieb im polyvalenten Betriebsbereich (REE) nur im Lesemodus zugängliche Zone (Z2) des Arbeitsspeichers (4).

13. Elektronisches Gerät (10), das wenigstens einen Prozessor (2) und einen Arbeitsspeicher (4) aufweist und wegen der Ausführung eines Vertrauensbetriebssystems (30) durch den Prozessor (2) für einen Betrieb in einem Vertrauensbetriebsbereich (TEE) oder für einen Betrieb in einem polyvalenten Betriebsbereich (REE) ausgelegt ist, **dadurch gekennzeichnet, daß** das Vertrauensbetriebssystem (30) dazu ausgelegt ist, Informationen (L1), die wenigstens eine Datei identifizieren, zu empfangen, wobei die die Datei identifizierenden Informationen in einer während des Betriebs im polyvalenten Betriebsbereich (REE) vorbereiteten Bedarfsbeschreibung (L1) enthalten sind, die Konformität der identifizierten Datei auf wenigstens ein bestimmtes Kriterium hin zu überprüfen und bei gegebener Konformität die identifizierte Datei in eine Zone (Z2) des Arbeitsspeichers (4), die bei Betrieb im polyvalenten Betriebsbereich (REE) nur im Lesemodus zugänglich ist, zu laden.

## Claims

1. Method of loading an application into random access memory (4) in an electronic device (10) designed to function in a trusted execution environment (TEE), because of the execution of a trusted operating system (30) by a processor (2) of the electronic device (10), or in a rich execution environment (REE), **characterised in that** it includes the following steps:
- reception (E10) by the trusted operating system (30) of information (L1) identifying at least one application, the information identifying said application being contained in a description of requirements (L1) prepared during functioning in the rich execution environment (REE);
- verification (E11) by the trusted operating system (30) of the conformance of the identified application to at least one given criterion;
- in the event of conformance, loading (E13) the identified application into an area (Z2) of random access memory (4) accessible in read only mode when functioning in the rich execution environment (REE).

2. Loading method according to Claim 1, wherein the description of requirements (L1) is constructed (E7) as a function of data (T1) representative of frequencies of use of applications installed in the rich execution environment (REE).

3. Loading method according to Claim 1 or 2, wherein the description of requirements (L1) is constructed (E7) as a function of use statistics relating to multiple criteria.

4. Loading method according to one of Claims 1 to 3, including the following steps, executed in the rich execution environment (REE) for each application mentioned in the description of requirements (L1):
- determining if the mentioned application has been loaded into said area (Z2) of random access memory (4) accessible in read only mode;
- if not, loading the corresponding application into another area (Z3) of random access memory (4) accessible in write mode during functioning in the rich execution environment (REE).

5. Loading method according to one of Claims 1 to 4, including a step (E14) of construction by the trusted operating system (30) of a sharing list (L2) including a designation (DES) of the loaded application and a storage address (ADR) of the loaded application.

6. Loading method according to Claim 5, wherein the sharing list (L2) includes integrity verification information (INT) associated with the loaded application.

7. Loading method according to Claim 5 or 6, wherein the sharing list (L2) includes a certificate (CERT) generated by the trusted operating system (30) and relating to the loaded application.

8. Loading method according to one of Claims 5 to 7, wherein the sharing list (L2) is stored in said area (Z2) of random access memory (4) accessible in read only mode during functioning in the rich execution environment (REE).

9. Loading method according to one of Claims 1 to 8, wherein said loading is effected from a non-volatile memory (6).

10. Loading method according to one of Claims 1 to 9, wherein said area (Z2) is accessible in read only mode during functioning in the rich execution environment (REE) by means of virtual addresses pointing to physical addresses distinct from the virtual addresses concerned.

11. Loading method according to one of Claims 1 to 10, wherein the information (L1) identifying the application is received on switching over from the rich execution environment (REE) to the trusted execution environment (TEE).

12. Loading method according to one of Claims 1 to 11, further including the following steps:
- following installation of a new application in the rich execution environment (REE), transmission (E26) to the trusted operating system (30) of an updated description of requirements (L1');
- loading (E30) into the area (Z2) of random access memory (4) accessible in read only mode during functioning in the rich execution environment (REE) a new file designated in the updated description of requirements (L1').

13. Electronic device (10) including at least one processor (2) and a random access memory (4) and designed to function in a trusted execution environment (TEE) because of the execution of a trusted operating system (30) by the processor (2) or in a rich execution environment (REE), **characterised in that** the trusted operating system (30) is designed to receive information (L1) identifying at least one application, the information identifying said application being contained in a description of requirements (L1) prepared during functioning in the rich execution environment (REE), to verify the conformance of the identified application with at least one given criterion and, in the event of conformance, to load the identified application into an area (Z2) of the random access memory (4) accessible in read only mode during functioning in the rich execution environment (REE).
